# EUROPEAN PATENT SPECIFICATION

(11) **EP 3 195 692 B1**
(45) Date of publication and mention of the grant of the patent: **02.09.2020**
(21) Application number: 15748311.6
(22) Date of filing: 28.07.2015
(51) Int. Cl.: H05B 1/02

(54) **APPARATUS AND METHOD FOR CONTROLLED HEATING OF A VEHICLE WINDOW**
VORRICHTUNG UND VERHALTEN ZUR HEIZUNG EINER FAHRZEUGSSCHEIBE
DISPOSITIF ET METHODE DE CONTROLE POUR CHAUFFAGE DE VITRE DE VEHICLE

(30) Priority: 22.08.2014 US 201462040487 P
(43) Date of publication of application: 26.07.2017
(73) Proprietor: Bombardier Inc., Dorval, QC H4S 1Y9 (CA); Short Brothers Plc, Belfast, BT3 9DZ (IE)
(72) Inventor: DENIS, Mathieu, Mirabel, Québec J7N 3H8 (CA); MONFETTE, Stephane, Lachine, Québec H8T 3N8 (CA); KEO, Nak, Laval, Québec H7L 4L4 (CA)
(74) Representative: HGF
(86) International application number: PCT/IB2015/055698
(87) International publication number: WO 2016/027184

(56) References cited:
- EP-A1- 0 991 301
- EP-A2- 2 657 133
- DE-A1- 10 058 434
- US-A- 5 496 989
- US-A1- 2006 086 715
- US-A1- 2010 123 044
- US-A1- 2012 234 816

## Description

### Field of the Invention

The present invention concerns an apparatus and method for controlled heating of a vehicle window. More specifically, the present invention concerns an apparatus and a method for controlled heating of an aircraft window, such as a cabin window to minimize fogging and ice formation on the window.

### Background and Description of the Related Art

In many passenger vehicles that travel through different climatic environments, such as aircraft for example, condensation and/or ice may form on passenger windows. Such condensation (or ice formation) on a window may prevent a passenger from enjoying the view outside the window, and as such detract from the passenger's enjoyment of his/her travel experience.

There is currently a trend in passenger vehicles to move towards larger windows that provide increased viewing surface for the passengers. As window sizes increase, the chance of having condensation and/or ice formation also increases.

In the prior art, there are a number of examples of heating systems and methodologies that are known for reducing the condensation of water or the formation of ice on an aircraft window. For example, closed loop systems that provide a temperature sensor associated with the window, such that power to a window heater is controlled directly on a basis of the readings from the temperature sensor are known. However, such systems require additional hardware and expense for the vehicle manufacturer.

Prior art methods for controlling power to a heating device on a vehicle are described in US5496989A, US2010/123044A & EP2657133A.

Therefore, the known apparatus, methods, and systems for providing heat to vehicle windows leave room for improvement.

### Summary of the Invention

The present invention addresses one or more of the deficiencies noted with respect to the prior art.

In one contemplated embodiment, the present invention provides a method for controlling power to a heating device on a vehicle according to claim 1.

In another contemplated embodiment, the power signal is indicative of a manner for modulating power to the heating device.

It is also contemplated that the power signal may be indicative of a power modulation level for modulating power supplied to the heating device.

Alternatively, the power modulation level may be selected from a set of power modulation levels.

Still further, the power signal may be indicative of a power duty cycle for achieving the power modulation level.

For one additional contemplated embodiment, the power signal may be indicative of an adjustment in power magnitude for achieving the power modulation level.

It is contemplated that the power modulation level may be selected from a set of pre-defined power modulation levels.

It is further contemplated that the power modulation level may be selected from values >0% and <100%. In a non-limiting example, the power modulation level may be selected between 1% to 99% of available power.

In one contemplated embodiment, the heating device is a metallic layer.

In another contemplated embodiment, the heating device includes at least two heating zones to which power is applied independently.

In another contemplated embodiment, the heating device is for a window of the vehicle.

The present invention also provides a controller for controlling power supplied to a heating device on a vehicle according to claim 12.

Still further, the present invention provides a system for controlling power supplied to a heating device on a vehicle according to claim 13.

Further aspects of the present invention will be made apparent from the paragraphs that follow.

### Brief Description of the Drawing(s)

The present invention will now be described in connection with the drawing appended hereto, in which:
Fig. 1 is a cross-section of a window for an aircraft constructed according to the present invention;
Fig. 2 is a graphical, plan view of one window constructed according to one contemplated embodiment of the present invention;
Fig. 3 is a graph illustrating an exemplary temperature-altitude envelope in which an aircraft may operate;
Fig. 4 is a graph illustrating a power control plot according to one contemplated mode of operation of the window heating system of the present invention;
Fig. 5 is a graphical illustration of a window heating system according to the prior art;
Fig. 6 is a graphical illustration of one non-limiting embodiment of a window heating system according to the present invention;
Fig. 7 is a flow chart illustrating one contemplated method of operation of a window heating system according to the present invention;
Fig. 8 is a graphical illustration of a second non-limiting embodiment of a window heating system according to the present invention;
Fig. 9 is a flow chart illustrating a second contemplated method of operation of a window heating system according to the present invention;
Fig. 10 is a flow chart illustrating a contemplated method of operation of the window heating system; and
Fig. 11 is a graphical illustration of a further non-limiting embodiment of a window heating system according to the present invention.

### Detailed Description of Embodiment(s) of the Invention

The present invention will now be described in connection with one or more embodiments thereof. The discussion of the embodiments is not intended to be limiting of the present invention. To the contrary, any discussion of embodiments is intended to exemplify the breadth and scope of the present invention. As should be apparent to those skilled in the art, variations and equivalents of the embodiment(s) described herein may be employed without departing from the scope of the present invention. Those variations and equivalents are intended to be encompassed by the scope of the present patent application.

The present invention will now be discussed in the context of the construction of a jet aircraft with one or more jet engines. While the invention is discussed in this context, the present invention is not intended to be limited solely to the construction of jet aircraft. The present invention also is applicable to any other type of aircraft, as should be apparent to those skilled in the art. In addition, while discussed in the context of aircraft, the present invention is considered to be applicable to vehicles other than aircraft, such as trains, subway cars and busses, among other possibilities.

In addition, the present invention will be discussed in the context of controlling power to a heating device for a window of the aircraft. However, it is to be understood that this invention may also be suitable for controlling the power to a heating device for a fairing, such as an enhanced vision system (EVS) heater fairing, or to a lens on a camera within the aircraft or vehicle.

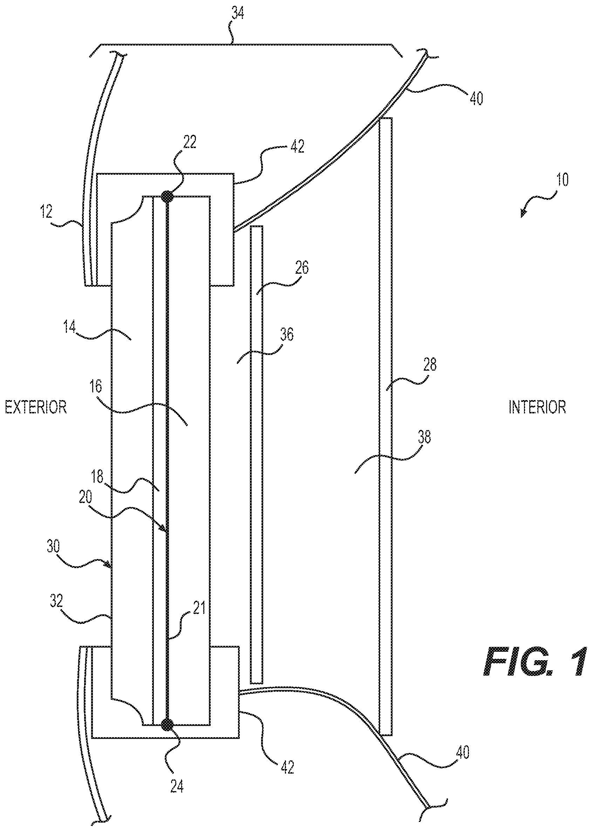

Fig. 1 is a cross-section illustration of a window 10, particularly an aircraft cabin window 10, that is contemplated to be heated by a window heating system 104 (not shown in Fig. 1) of the present invention.

Before describing the window heating system 104, a description of one or more contemplated embodiments of the window 10 is first described.

The window 10 includes a frame 12. While the frame 12 may be constructed from any suitable material, it is contemplated that the frame 12 will be made from a metal alloy, such as an aluminum alloy. Alternatively, the frame 12 may be made from a composite material, such as a carbon fiber composite material, among others.

The frame 12 is contemplated to have a generally rectangular shape with rounded corners. While this shape is contemplated for the window 10 described herein, the frame 12 may have any shape without departing from the scope of the present invention.

The frame 12 surrounds an outer structural pane 14 and an inner structural pane 16. In the illustrated embodiment, the outer pane 14 is separated from the inner structural pane 16 by an interlayer 18, which may be made from a suitable material such as polyurethane. Alternatively, the interlayer 18 may be made from other materials without departing from the scope of the present invention. The structural panes 14, 16 also may be separated by an air gap without departing from the scope of the present invention.

The structural panes 14, 16 are contemplated to be made from acrylic. Alternatively, the structural panes 14, 16 may be made from other transparent materials, such as glass. Other alternative materials include, but are not limited to transparent composite materials, ceramics, and laminates, for example.

Heat is provided to the window 10 by a heating device 20, which in the non-limiting embodiment shown in Fig. 1 is a heating film 21. The heating device 20 may comprise another means than a heating film 21 without departing from the scope of the present invention. For example, heating device 20 may comprise a wire sandwiched between the structural panes 14, 16, for example.

It is contemplated that the heating film 21 may be sandwiched between the interlayer 18 and the inner structural pane 16. In one embodiment, it is contemplated that the heating film 21 may be made from a very thin metallic layer, such as a layer of gold, for example. Alternatively, the heating film 21 may be made from indium tin oxide or any other suitable material. The heating film 21, or heating device 20, does not need to be embedded within the window 10. It is contemplated that the heating film 21 may be located on a surface of the window 10, on a separate pane, or any other location where heat may be provided to the window 10. In one embodiment, the heating film 21 is electrically powered through two bus bars 22, 24.

It is contemplated that the window assembly 34 also includes outer and inner completion panes 26, 28. The completion panes 26, 28 may be made of polycarbonate or any other suitable material. A window shade may be inserted between and/or adjacent to the completion panes 26, 28, as required or as desired.

With respect to the outer structural pane 14, it is noted that the exterior surface 30 may be provided with a suitable coating, such as an abrasion-resistant coating 32 or the like. In addition, the exterior surface 30 of the outer structural pane 14 may be provided with a suitable reflective coating 32 or treatment to reduce the transmission of light through the window 10. As should be apparent to those skilled in the art, other coatings 32 and treatments may be applied to any of the surfaces of the outer structural pane 14, the inner structural pane 16, the outer completion pane 26, the inner completion pane 28, the interlayer 18, a separate heater pane (not shown) or any other surface of the window assembly 34 without departing from the scope of the present invention.

As illustrated in Fig. 1, the inner structural pane 16 is disposed adjacent to the outer completion pane 26. The inner structural pane 16 is separated from the outer completion pane 26 by a gap 36 in the illustrated embodiment. The gap 36 is understood to be filled with air. However, it is contemplated that the gap 36 may be filled with gases other than air without departing from the scope of the present invention.

With respect to the gap 36, the gap 36 may have any size as may be required or desired for a particular aircraft window 10. In other words, the distance between the inner structural pane 16 and the outer completion pane 26 may differ from one construction of a window 10 to another without departing from the scope of the present invention. In addition, it is noted that the gap 36 need not be uniform over the entirety of the surface area of the window 10. For example, it is contemplated that one or both of the inner structural pane 16 and/or the outer completion pane 26 may present a concave or a convex surface. As a result, the gap 36 may not be uniform between the inner structural pane 16 and the outer completion pane 26.

As also illustrated in Fig. 1, the outer completion pane 26 is disposed adjacent to the inner completion pane 28. The outer completion pane 26 is separated from the inner completion pane 28 by a gap 38 in the illustrated embodiment. The gap 38 is understood to be filled with air. However, it is contemplated that the gap 38 may be filled with gases other than air without departing from the scope of the present invention.

With respect to the gap 38, the gap 38 may have any size as may be required or desired for a particular aircraft window 10. In other words, the distance between the outer completion pane 26 and the inner completion pane 28 may differ from one construction to another without departing from the scope of the present invention. In addition, it is noted that the gap 38 need not be uniform over the entirety of the surface area of the window 10. For example, it is contemplated that one or both of the outer completion pane 26 and/or the inner completion pane 28 may present a concave or a convex surface. As a result, the gap 38 may not be uniform between the outer completion pane 26 and the inner completion pane 28.

With continued reference to Fig. 1, the outer completion pane 26 and the inner completion pane 28 are surrounded by a window reveal 40. The window reveal 40 is contemplated to be made of plastic. As should be apparent to those skilled in the art, any other suitable material may be employed for the window reveal 40 without departing from the scope of the present invention.

The window 10 is contemplated to be held in place by the pressure within the aircraft cabin. This kind of installation is commonly referred to as plug-type by those skilled in the art. When no pressure gradient exists, the window 10 is held in place by retainer clips 42. Alternatively, the window 10 may be fixed by fasteners, screws, glue or any other means without departing from the scope of the present invention.

The description of the construction of the window 10 in connection with Fig. 1 is not intended to be limiting of the present invention. For example, it is contemplated that alternative constructions of the window 10 may include additional seals, frame elements, and fasteners. The window assembly 34 also may be made of more or less structural panes, interlayers, gaps, completion panes, heating films, or other subassemblies. The window 10 of the present invention, therefore, is not contemplated to be limited to the embodiment illustrated. To the contrary, the window 10 of the present invention is contemplated to encompass a large variety of different constructions.

In the embodiment illustrated in Fig. 1, it is contemplated that the heating device 20, which in the embodiment shown is the heating film 21, is distributed evenly across the entire surface of the window 10. In alternative embodiments, it is contemplated that only selected areas of the window 10 may be covered with the heating device 20.

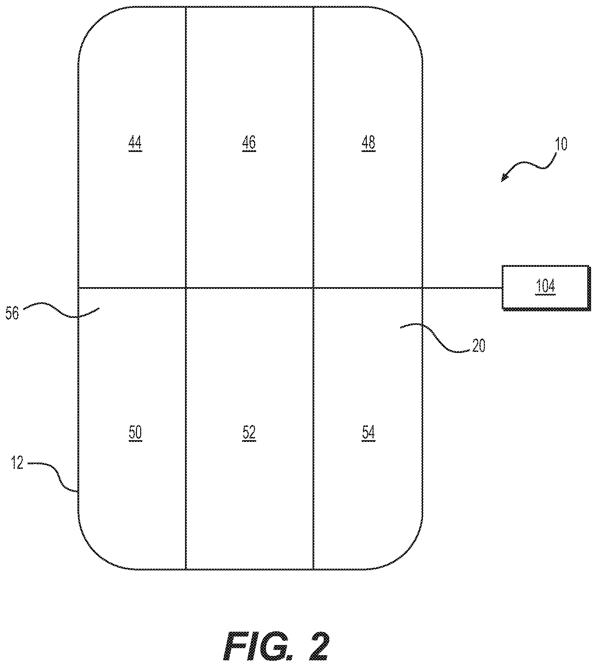

In one contemplated embodiment, which is illustrated in Fig. 2, the heating device 20 may be applied to the window 10 to establish heating zones 44, 46, 48, 50, 52, 54 with respect to the total surface area 56 of the window 10. Power may be applied to each of the heating zones independently so that heat may be applied only to certain zones of the window 10. As should be apparent to those skilled in the art, where separate heating zones 44, 46, 48, 50, 52, 54 are employed, the window 10 may include a larger or a fewer number of zones without departing from the scope of the present invention. Moreover, the heating zones 44, 46, 48, 50, 52, 54, 56 may be any shape or pattern without departing from the scope of the present invention. With different heating zones 44, 46, 48, 50, 52, 54, it is contemplated that the widow 10 may operate with a lower total power demand than instances where the heating device 20 is applied across the total surface of the window 10.

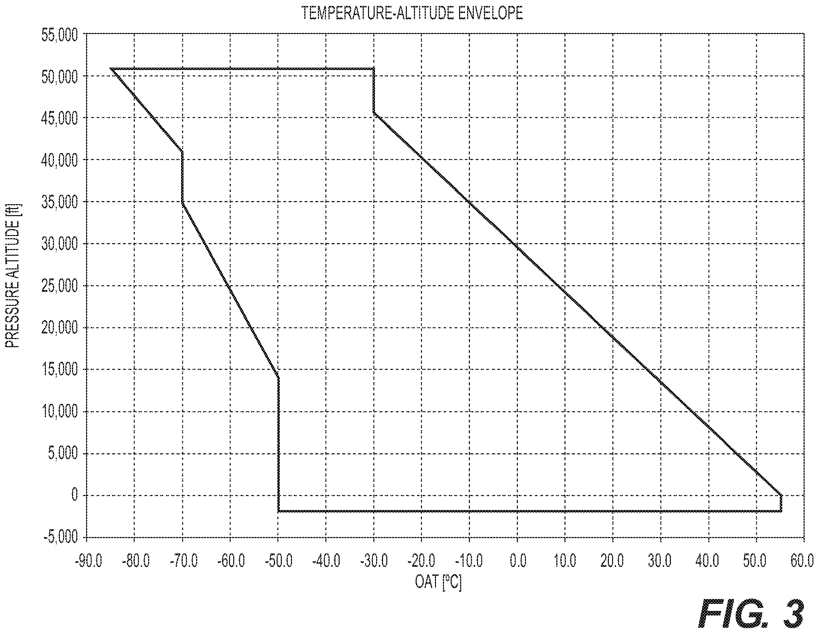

Fig. 3 provides a graphical plot of pressure altitude (in feet) (y-axis) versus the outside air temperature (OAT) in °C (x-axis). The circumscribed zone represents typical operational conditions for civilian aircraft. As should be apparent to those skilled in the art, and as should be apparent from Fig. 3 the outside air temperature changes considerably with altitude. Therefore, to maintain the window temperature within a predetermined range, the power provided to the heating device 20 changes as a function of the outside air temperature and/or the altitude.

Other parameters also influence the power requirement, as it will be discussed below. The current embodiment is contemplated to provide temperature control within the envelope presented by Fig. 3. The envelope presented by Fig. 3 is not contemplated to be limited to the embodiment illustrated. To the contrary, the envelope applicable to the present invention is contemplated to encompass a large variety of different altitudes and temperatures for both civilian and military operation.

Referring back to Fig. 2, a heating system 104 is in communication with the heating device 20 for controlling and/or modulating the power to the heating device 20 of the window 10. As will be described in more detail below, the heating system 104 of the present invention takes an open loop approach to controlling the heating of the window 10, which takes into account environmental conditions both interior and exterior to the aircraft, such as the OAT and the aircraft speed, to control the heating applied to the window 10.

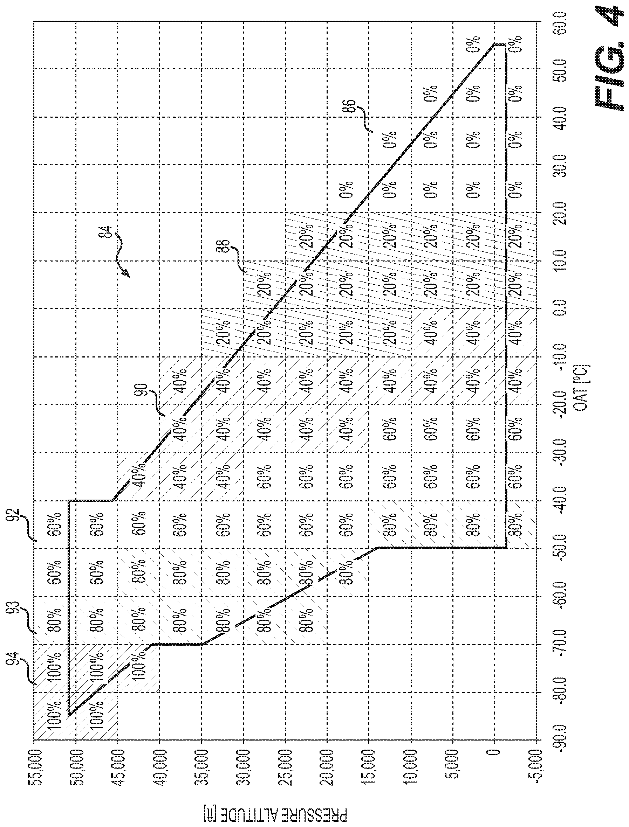

Fig. 4 is an illustration of one contemplated power control plot 84 that may be employed with respect to controlling and/or modulating the power to the heating device. The shape of the power control plot 84 parallels the shape of the plot in Fig. 3. As used herein, modulating the power refers to providing only a portion or percentage of the total possible power available to the heating device over a period of time. This can be done by adjusting the magnitude of the power or by controlling an on/off duty cycle during a recurring, relatively short period of time. It is to be understood that power modulation does not include the binary state of turning the power ON (100%) when Twindow < Tmin and turning the power OFF (0%) when Twindow > Tmax.

The power control plot 84 of Fig. 4 illustrates six control zones 86, 88, 90, 92, 93, 94, each representing a different power modulation level that may be applied to the heating device 20. Each of the control zones 86, 88, 90, 92, 93, 94 is associated with a different level of power consumption, which are indicated as a percentage of the total power to be applied by the heating system 104 to the heating device 20. In this manner, the heating system 104 is able to modulate the power supplied to the heating device 20. The first control zone 86 refers to a region of the power control plot 84 where power is OFF (0%) for the heating device 20. The second control zone 88 encompasses an area of the power control plot where power is applied to the heating device 20 at 20% of the maximum. The third control zone 90 encompasses an area of the power control plot where power is applied to the heating device 20 at 40% of the maximum. The fourth control zone 92 encompasses an area of the power control plot where power is applied to the heating device 20 at 60% of the maximum. The fifth control zone 93 encompasses an area of the power control plot where power is applied to the heating device 20 at 80% of the maximum. The sixth control zone 94 encompasses an area of the power control plot where power is applied to the heating device 20 at 100% of the maximum. As indicated above, the power control plot 84 is merely one contemplated arrangement for operation of the heating device 20 of the present invention. The control plot 84 may have any number of possible power modulation levels and each zone may be associated with any appropriate percentage of maximum power to be applied to the heating device 20.

It is also to be understood that the control plot 84 is not limited to the OAT and altitude parameters and may be associated with other parameters, including those described further on below. It is also contemplated that the power modulation level may be dynamically adjusted across the range of OAT, and not be divided into six discrete regions. For example, the power modulation level may be changed for each degree, or partial degree, of temperature change. Therefore, the power modulation level may comprise any power level >0% and <100%. In a non-limiting example, the power modulation level may be selected between 1% and 99% of available power.

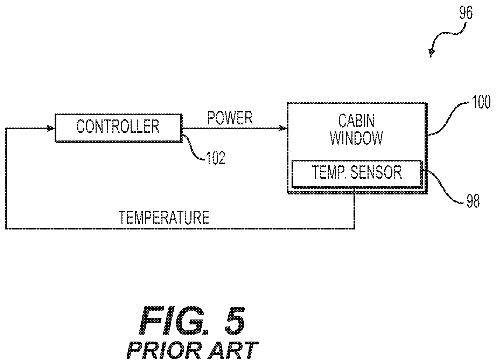

Fig. 5 is a graphical overview of a window heating system 96 according to the prior art that operates as a closed-loop system. The heating system 96 includes a temperature sensor 98 that is in contact with a window 100. Temperature data from the temperature sensor 98 is transmitted to a controller 102. The controller 102 then applies power to a heating element in the window 100 responsive to the temperature data from the temperature sensor 98. This prior art window heating system 96 is referred to as a closed-loop system because the temperature of the window 100 is being controlled directly on a basis of temperature data received from the window 100, such that there is direct feedback on the temperature that is being controlled. It should also be understood that the prior art relies on window temperature thresholds: power is 100% ON if Twindow < Tmin, and power is OFF (0%) if Twindow > Tmax. There is no modulation of the power supplied to known heating devices in the prior art.

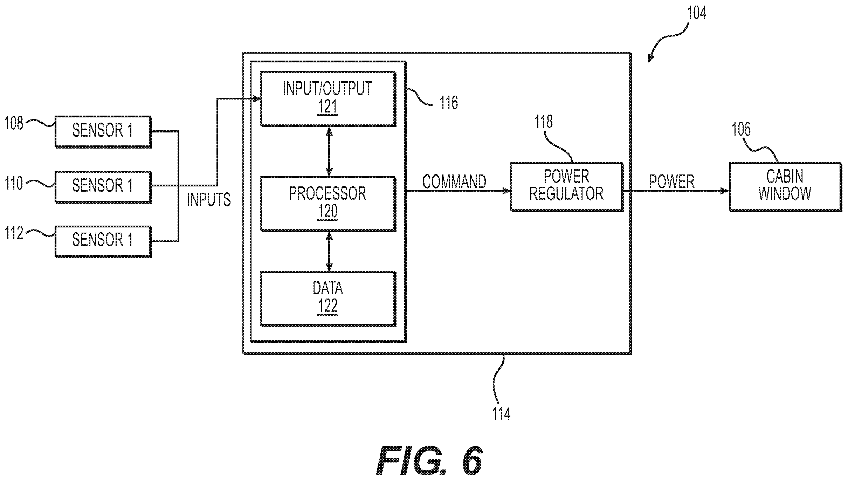

Fig. 6 illustrates one contemplated embodiment of the window heating system 104 according to the present invention. The heating system 104 controls the power supplied to the heating device 20 of the cabin window 106 in accordance with an open-loop system. More specifically, the open loop system takes into consideration environmental parameters that do not provide a direct reading of the window temperature, in order to control power supplied to the cabin window 106. In the non-limiting embodiment shown, the window heating system 104 is in communication with a first sensor 108, a second sensor 110, and a third sensor 112 that are contemplated to be associated with various respective environmental parameters associated with the operation of the aircraft. It should, however, be appreciated that the heating system 104 may be in communication with any number of sensors (including a single sensor) 108, 110, 112 without departing from the present invention. It should also be appreciated that the heating system 104 may not be in direct communication with each of the sensors 108, 110, 112 but, instead, may receive readings from the sensors 108, 110, 112, via other aircraft components, such as through the avionics suite, the cabin management system, or the flight control computer, among other possibilities. The sensors may include any probe, communication equipment or other device relaying inputs to the heating system 104, directly or indirectly.

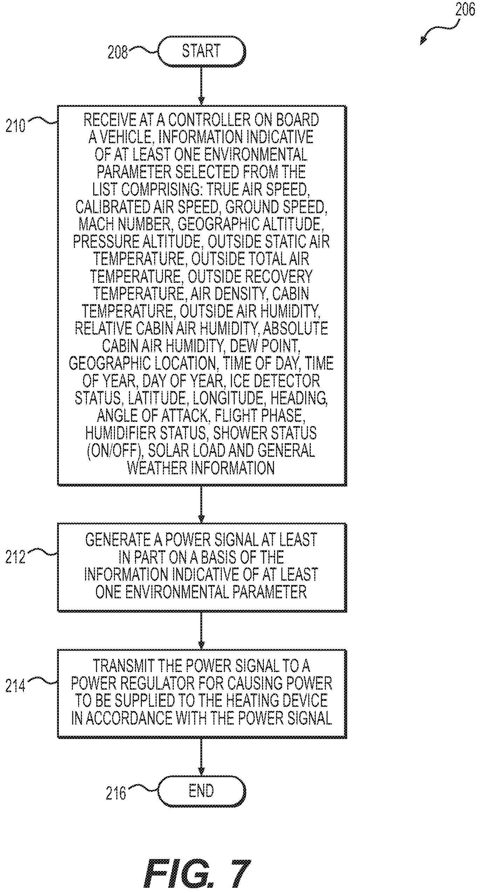

The sensors 108, 110, 112 may provide to the heating system 104 readings associated with a variety of different environmental parameters, which could be environmental parameters both internal and/or external to the aircraft. In the non-limiting embodiment of Fig. 7, the first sensor 108 provides a reading of an air speed of the aircraft, the second sensor 110 provides a measure of the out of aircraft temperature (OAT) and the third sensor 112 provides a measure of the altitude of the aircraft. Still further sensors may be employed as required or as desired. Examples of other environmental parameters that may be used by the heating system 104 of the present invention include: speed (true air speed, calibrated air speed, ground speed, Mach number), altitude (geographic, pressure), OAT (static air temperature, total air temperature, recovery temperature), air density, cabin temperature, weight on wheels condition, outside air humidity, cabin air humidity (relative humidity, absolute humidity, dew point), geographic location (i.e. from GPS signal, or other positioning signal), time of day, time of year, day of year, ice detector status, aircraft management system (AMS) status, flight management system (FMS) status, cabin management system (CMS) status, electrical system status, latitude, longitude, heading, angle of attack, flight phase, manual control, humidifier status, shower status (on/off), solar load, general weather information, etc.

As shown in Fig. 6, the heating system 104 comprises a controller 116 and a power regulator 118. The controller 116 comprises an input/output module 121, which connects to a processor 120 that is in communication with a memory unit 122 for storing data and/or program logic. The readings from the sensors 108, 110, 112 are received at the input/output module 121 of the controller 116, and then passed to the processor 120 for processing in accordance with program instructions and/or data stored in the memory unit 122. For example, the memory unit 122 may store a control plot, such as control plot 84 shown in Fig. 4, such that the processor 120 is able to generate a power signal for controlling the power supplied to the heating device 20. A power signal command is output from the input/output module 121 of the controller 116. The power signal is transmitted to a power regulator 118. The power regulator 118 then generates an electrical signal for control of the heating device 20 of the window 106 at least in part on a basis of the power signal generated by the controller 116. As noted above, heating of the window 106 is made possible by application of power to the heating device 20, which may be in the form of the heating film 21, shown in Fig. 1.

The processor 120 may comprise one or more processors and computer-readable memory(ies)/medium(ia) containing instructions readable and executable by the processor 120. The processor 120 may for example, comprise or be part of one or more digital computer(s) or other data processors or other suitably programmed or programmable logic circuits. The processor 120 may comprise general purpose computer(s), special purpose computer(s), or other programmable data processing apparatus, and may be configured for use onboard the aircraft.

As should be apparent to those skilled in the art, the processor 120 that is part of the heating system 104 of the present invention may generate output signals as a result of a lookup operation, application of an algorithm to the input signals, or a combination of the two. The present invention is not intended to be limited by the method employed to generate an output signal from the input variables.

The memory unit 122 may comprise any combination of one or more suitable computer readable medium(ia). The computer readable medium may be a non-transitory computer readable storage medium. Such non-transitory computer readable storage medium may comprise, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer-readable storage medium may be any tangible medium that can contain, or store instructions for use by or in connection with an instruction execution system, apparatus, or device such as the processor 120 described above.

As should be apparent to those skilled in the art, the sensors 108, 110, 112 may be connected to the Flight Management System (FMS), the aircraft management system ("AMS"), the cabin management system (CMS), or any other existing aircraft system that is able to provide suitable environmental parameters, or other parameters, to the controller 116. As such, the sensors 108, 110, 112 may provide operational input to the heating system 104 without receiving direct temperature information from the window 106.

As discussed above, it is noted that the example of the prior art illustrated in Fig. 5 is referred to as a closed loop system. The heating system 104 of the present invention is contemplated to be an open loop system.

Fig. 7 is a flow chart illustrating one contemplated method 206 for operation of a window heating system, such as the window heating system 104, according to the present invention. The method 206 starts at step 208. The method 206 proceeds from step 208 to step 210 where information is received at the controller 116 on board the vehicle indicative of at least one environmental parameter selected from a list of environmental parameters, such as the list set forth above. From step 210, the method 206 proceeds to step 212 where the controller 116 generates a power signal at least partially based on the information indicative of the least one environmental parameter. From step 212, the method 206 proceeds to step 214 where the power signal is transmitted to the power regulator 118 for causing power to be supplied to the heating device in accordance with the power signal. The method 206 ends at step 216.

As should be apparent from the foregoing, the method 206 may be modified to include any number of additional steps without departing from the scope of the present invention. For example, it is contemplated that the method 206 may include generating a power signal that is indicative of a power modulation level (as will be described in more detail below), thereby permitting the power to be supplied to the heating device according to a plurality of power modulation levels. The power modulation levels may be equal or unequal divisions of a range for the power signal.

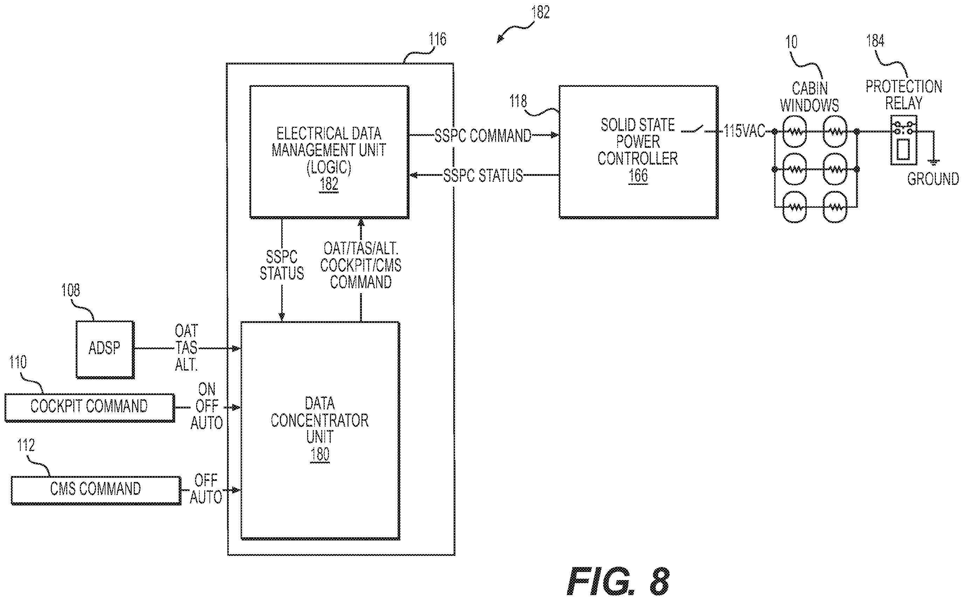

Fig. 8 is a graphical illustration of a further embodiment of a window heating system 182 according to the present invention. This illustration provides additional details consistent with an implementation of the heating system 182 being in an aircraft.

The sensors 108, 110 and 112 are represented in Fig. 8 by an Air Data System Probes (ADSP), a cockpit command and a Cabin Management System (CMS) command. The ADSP 108 provides three environmental parameters: Outside Air Temperature (OAT), True Air Speed (TAS) and altitude. The cockpit command 110 has three modes: ON, OFF and auto and the CMS command 112 has two modes: OFF and auto.

The inputs received from the ADSP 108, cockpit command 110 and CMS command 112 are gathered and stored in the controller 116, which in the embodiment shown includes a Data Concentrator Unit (DCU) 180 and an Electrical Data Management Unit (EDMU) 182. The DCU 180 provides the environmental parameters used for the control logic to the Electrical Data Management Unit (EDMU) 182. The EDMU 182 hosts the control logic for processing the environmental parameters and processes the inputs from the DCU 180 to calculate the required power in accordance with the control logic. The Electrical Data Management Unit (EDMU) 182 then provides a power signal to a power regulator 118, which in the figure shown is a Solid State Power Controller (SSPC) 166.

The heating system 182 is operative for modulating the power supplied to the heating device 20 (not shown) and so the power signal issued by the EDMU 182 is a square wave signal that commands the SSPC 166 (the power regulator 118) to modulate power to the cabin windows 10. The SSPC 166 is essentially a switch that alternatively closes and opens the circuit. In a non-limiting example where the signal has a periodicity of 10 seconds, the modulation is achieved by a duty cycle that controls the ratio of time, within a short recurring time period, that the circuit is closed and open. For instance, if the circuit in closed (power ON) for 4 seconds and then opened (power OFF) for 6 seconds, the average duty cycle achieved over the period of 10 seconds is 40%. Note that the period of the signal can have any length, as long as the time period is small compared to the thermal time constant of the window.

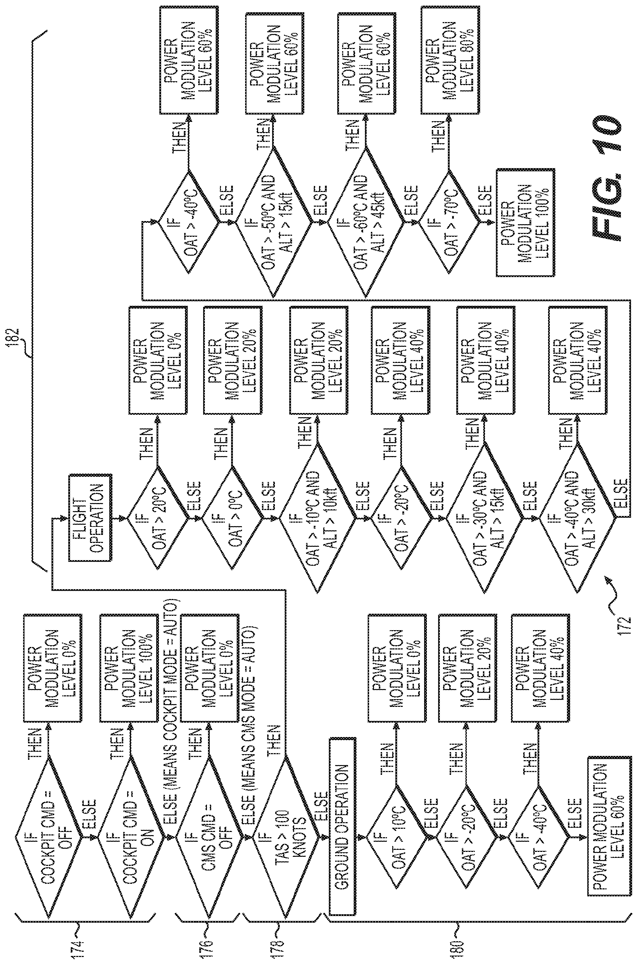

As previously described, the power regulator 118 (which is shown as an SSPC 166 in Fig. 10) provides power to the cabin windows 10. In the embodiment shown, six (6) windows are constituted of three (3) parallel groups of two (2) windows in series. Note that the windows 10 may be grouped in any numbers and organized in parallel and/or series without departing from the scope of the invention.

The avionic and electrical system architecture shown in Fig. 8 is also provided with a protection relay 184 to prevent any risk of overheat in case of system malfunction. As should be apparent to those skilled in the art, the heating system 182 may be further equipped with any kind of device that would protect, test or monitor the heating system 182 without departing from the scope on the present invention. Such devices can include, but are not limited to: thermal fuse, electrical fuse, protection relay, timer, Built-in test (BIT), Power-On Built-In Test (PBIT), Initiated Built-In Test (IBIT), Continuous Built-In Test (CBIT), ohmmeter, voltmeter, and ammeter.

As discussed above, the power control provided to the heating device 20 of the cabin windows is based on an open loop concept that takes into consideration at least one environmental parameter selected from one or more of the following: air speed, ground speed, altitude, outside air temperature, cabin temperature, recovery temperature, weight on wheels condition, outside air humidity, cabin air humidity, geographic location, time of day, time of year, day of year, ice detector status, aircraft management system status, flight management system status, cabin management system status, electrical system status, latitude, longitude, heading, angle of attack, flight phase, manual control, humidifier status, shower status, solar load, and general weather information.

As further described above, the heating system 104, 182 of the present invention is further operative to modulate the power supplied to the heating device 20 of the cabin windows 10. This modulation may be based on any parameter (such as window temperature) as well as any of the environmental parameters described above. As indicated above, modulating the power refers to providing only a portion or percentage of the total possible power available to the heating device over a period of time. This can be done by adjusting the magnitude of the power, or by controlling an on/off duty cycle during a recurring, relatively short period of time.

As should be apparent from Fig. 4, for example, where OAT is employed as one of the variables assessed by the processor 120 for operation of the heating device 20, the operational range of temperatures is divided into six power modulation levels (or four power modulation levels if 100% and 0% are not considered to be modulation levels). The six power modulation levels correspond to the six modulation levels used to generate the power signal for operation of the heating device 20. As should be apparent, the entire operational range may be divided into a larger or a smaller number of power modulation levels for operation of the heating system 104 of the present invention.

With respect to the modulation levels for the power, it is noted that there are several methodologies that may be employed. At 40% power, it is contemplated that power at 40% of full intensity may be applied continuously to the heating device 20. Alternatively, power may be applied at 100% for two fifths of the total heating time. In this second example, the heating device 20 may be activated only 40% of the time, in short, recurring intervals, rather than at 40% power.

In addition, the same logic applied to the OAT may be applied to any of the variables that provide input to the controller 116 of the present invention. For example, if air speed were used as a variable to determine the modulation level for the heating device 20, the total air speed range for the aircraft may be divided into as many power modulation levels as required or as desired. The power modulation applied to the heating device 20 of the cabin windows 10 may then be matched to, or applied in accordance with, the different power modulation levels.

As should be apparent, the different variables that may be provided to the controller 116 are contemplated to provide an overview of the operational state of the aircraft at any stage of operation. The plurality of variables may be divided into sub-ranges, as noted above. The sub-ranges for the variables may be used to define two or more modulation levels for the heating device 20 in the window 106.

It is noted that the power modulation levels need not be the same. In the embodiment illustrated in Fig. 4, the levels span different temperature ranges (some a span of 20 °C and others a span of 40 °C, etc.). However, the power modulation levels may also span across a temperature range uniformly. However, reliance on uniform sub-ranges is not required to practice the present invention. The sub-ranges may differ from one another, as required or as desired.

Separately, the power modulation levels may be evenly selected from 0% to 100%, and divided in increments of 20%. However, the modulation levels need not be uniformly selected from 0% to 100%. To the contrary, for example, a first modulation level (out of six) might result in application of 8.2% power, while a fourth modulation level (out of six) might require application of 96.3% power to the heating device 20. The power modulation levels may also vary across the y axis, which in Fig. 4 represents the Pressure Altitude (ft).

It is noted that the ranges described herein are discussed in connection with discrete power modulation levels. For example, with reference to Fig. 4, it is noted that if OAT is anywhere between -40 °C and -20 °C at a Pressure Altitude of 30,000 ft, the modulation level is 40 %. It should however be understood that for purposes of the present invention, it is contemplated that the power modulation levels may be dynamically adjusted across the range of OAT or across the range of Pressure Altitude. For example, the modulation level may be changed for each degree, or partial degree, of temperature change. Still further, a precise modulation level may be calculated for each OAT such that the modulation level is constantly changing based on the conditions associated with the operation of the aircraft at any given moment in time.

Additionally, the heating system 104, 182 is designed to make adjustments to the heating device 20 based on anticipated, future conditions associated with operation of the aircraft. For example, if the aircraft is ascending to a flight altitude of 40,000 feet, the controller 116 adjusts the power to the heating device 20 to accommodate the final, anticipated flight conditions rather than making smaller adjustments during the transition to the cruising altitude.

As noted above, there are several methodologies that may be employed to achieve the various power modulation levels. At 40% power, it is contemplated that power at 40% of full intensity may be applied continuously to the heating device 20. Alternatively, power may be applied at 100% for two fifths of a recurring heating time. In this second example, the heating device 20 may be activated only 40% of a short recurring time period, rather than at 50% power. Note that the period of power activation can have any length, as long as the time period is small compared to the thermal time constant of the window.

For purposes of the present invention, it is noted that the cyclic application of power may be used. Since the heating device 20 is applied to glass or acrylic (in certain contemplated embodiments), both of which have a low transmission of heat, it is contemplated that the glass or acrylic will retain the heat for a period of time. As a result, it is contemplated that it may not be necessary to have a constant heating pattern. A cyclic pattern of, for example, 5 seconds of heating following by 5 seconds without heating, may be employed.

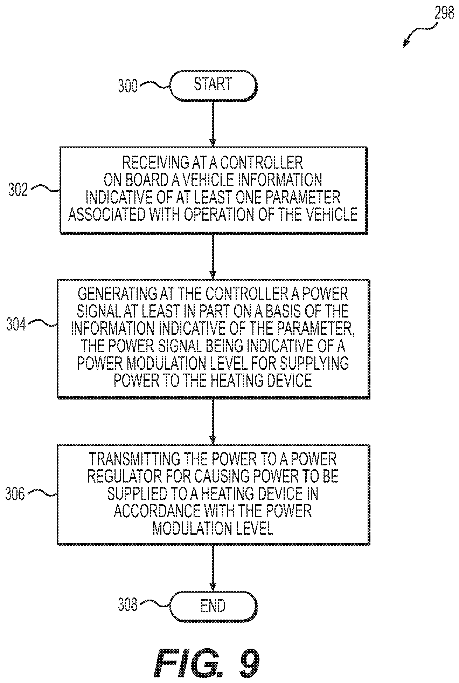

Shown in Fig. 9 is a flow chart illustrating one contemplated method 298 for operation of a window heating system, such as the window heating system 104, 182, according to the present invention. The method 298 starts at step 300. The method 298 proceeds from step 300 to step 302 where information is received at the controller 116 indicative of at least one parameter associated with operation of the vehicle. From step 302, the method 298 proceeds to step 304 where the controller 116 generates a power signal at least partially based on the information indicative of the least one parameter. The power signal is indicative of a power modulation level for power to be supplied to the heating device 20. From step 304, the method 298 proceeds to step 306 where the power signal is transmitted to the power regulator 118 for causing power to be supplied to the heating device in accordance with the power modulation level. The method 298 ends at step 308.

In this contemplated embodiment, the method 298 may include the steps of receiving a window temperature signal from a window temperature sensor and generating the power modulation level based in part on at least the window temperature signal. As noted, other parameters also may be employed by the method 298.

Fig. 10 illustrates one contemplated non-limiting control logic 172 for operation of the window heating system 182 of the present invention described with respect to Fig 8 and using the control plot of Fig. 4. The first part 174 of the control logic 172 processes the command from the cockpit. If the cockpit commands to turn OFF the heating device 20, then the power, or power modulation level, is set to 0%. If the cockpit commands to turn ON the heating device 20 (mostly for test procedure), then the power, or power modulation level, is set to 100%.

If the cockpit commands to put the heating system 182 in auto mode, then the second part 176 of the control logic 172 processes the command from the Cabin Management System (CMS), which is contemplated to be activated by the customer or flight attendant. If the CMS commands to turn OFF the heating device 20, then the power, or power modulation level, is set to 0%.

If the CMS commands to put the heating system 182 in auto mode, then then third part 178 of the logic 172 evaluates if the aircraft is in ground or flight operation. If the true air speed (TAS) is greater than 100 knots, then the aircraft is considered in flight and the fifth part 182 of the control logic 172 is processed. If the TAS is lower or equal to 100 knots, then the aircraft is considered on ground and the fourth part 180 of the control logic 172 is processed.

During ground operation 180, if the OAT is greater than 10°C, then the power, or power modulation level, is set to 0%. Otherwise, if the OAT is greater than -20°C, then the power, or power modulation level, is set to 20%. Otherwise, if the OAT is greater than -40°C, then the power, or power modulation level, is set to 40%. Otherwise, the power, or power modulation level, is set to 60%.

During flight operation 182, if the OAT is greater than 20°C, then the the power, or power modulation level, is set to 0%. Otherwise, if the OAT is greater than 0°C, then the power, or power modulation level, is set to 20%. Otherwise, if the OAT is greater than -10°C AND the altitude is greater than 10,000ft, then the power, or power modulation level, is set to 20%. Otherwise, if the OAT is greater than -20°C, then the power, or power modulation level, is set to 40%. Otherwise, if the OAT is greater than -30°C AND the altitude is greater than 15,000ft, then the power, or power modulation level, is set to 40%. Otherwise, if the OAT is greater than -40°C AND the altitude is greater than 30'000ft, then the power, or power modulation level, is set to 40%. Otherwise, if the OAT is greater than -40°C, then the power, or power modulation level, is set to 60%. Otherwise, if the OAT is greater than -50°C AND the altitude is greater than 15,000ft, then the power, or power modulation level, is set to 60%. Otherwise, if the OAT is greater than -60°C AND the altitude is greater than 45'000ft, then the power, or power modulation level, is set to 60%. Otherwise, if the OAT is greater than -70°C, then the power, or power modulation level, is set to 80%. Otherwise, the power, or power modulation level, is set to 100%. Note that the fifth part 182 of the control logic 172 related to the flight operation can be directly derived from a power control plot, such as the one shown in Fig. 4.

As should be apparent from the foregoing, the amount (or magnitude) of power may be varied without departing from the scope of the present invention. Moreover, the power, or power modulation level, for adjusting the temperature of the cabin window 10 may be altered without departing from the scope of the present invention.

Although in the above example, OAT is the parameter described, it should be appreciated that with respect to the present invention, and as indicated above, the parameters detected by the sensors 108, 110, 112 that are used to control the power, or power modulation level, supplied to the heating device 20 of the windows 10 may include, but are not limited to, parameters such as true air speed, calibrated air speed, ground speed, Mach number, geographic altitude, pressure altitude, outside static air temperature, outside total air temperature, outside recovery temperature, air density, cabin temperature, outside air humidity, relative cabin air humidity, absolute cabin air humidity, dew point, geographic location, time of day, time of year, day of year, ice detector status, latitude, longitude, heading, angle of attack, flight phase, humidifier status, shower status (on/off), solar load and general weather information. In addition, these parameters are contemplated to be provided via the flight management system onboard the aircraft. At least one of these variables is required, but the present invention contemplates reliance on at least two of the variables: (1) air speed or pressure altitude, and (2) outside air temperature.

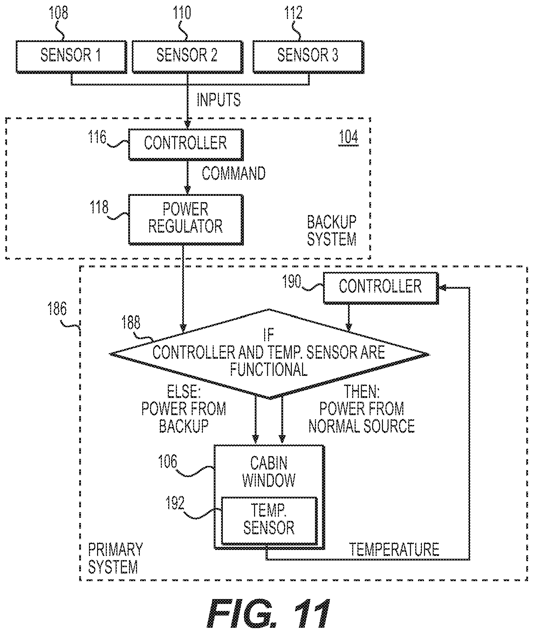

Fig. 11 is a graphical illustration of a further embodiment of the present invention, wherein the heating system 104 can be used as a back-up system to provide redundancy for a more traditional window heating system 186. As illustrated, the traditional heating system 186 is modified in Fig. 11 to accommodate the heating system 104 as a backup system. The window system 186 also includes a temperature sensor 192 that is operated in association with the window 106.

The backup heating system 104 is connected to a discriminator 188. The discriminator 188 also receives data from a controller 190 that is connected to the temperature sensor 192.

It is contemplated that the discriminator 188 will allow power to be provided to the heating device 20 in the cabin window 106 under normal operating conditions. If there is a failure in the normal mode of operation, power will be applied to the heating device 20 in the cabin window 106 according to the operational parameters associated with the logic in the processor controller 116, which has been described in detail above.

It is also contemplated that the backup system 104 is the primary system and the loop associated with the temperature sensor 192 is relied upon as the backup system.

Still further, it is contemplated that the window heating system 104 operates in cooperation with the temperature sensor 192. In this arrangement, the window temperature signal generated by the window temperature sensor 192 becomes an additional variable for calculating the power, or power modulation level, applied to the heating device 20.

In a specific non-limiting example, power modulation via a duty cycle could be controlled via mechanical means, such as a set of cams or gear-like mechanisms that activate switches. A temperature input would select which cam/gear turns and the teeth pitch on the gear may be a pre-determined duty cycle. There could be 1 gear/cam per duty cycle.

As noted above, the embodiment(s) described herein are intended to be exemplary of the wide breadth of the present invention.

## Claims

1. A method for controlling power to a heating device (20) on a vehicle, the method comprising:
receiving information indicative of altitude of the vehicle and outside air temperature generating a signal at least in part on a basis of the information indicative of the altitude of the vehicle and outside air temperature for controlling power to the heating device (20) in an open loop manner; and
causing power to be supplied to the heating device (20) in accordance with the signal,
**characterized in that** adjustments to the heating device (20) are based on an anticipated cruising altitude of the vehicle.

2. The method of claim 1, wherein the signal is indicative of a manner for modulating power to the heating device (20).

3. The method as defined in claim 2, wherein the signal is indicative of a power modulation level for modulating power supplied to the heating device (20).

4. The method as defined in claim 3, wherein the power modulation level is selected from a set of power modulation levels.

5. The method as defined in claim 3, wherein the signal is indicative of a power duty cycle for achieving the power modulation level.

6. The method as defined in claim 3, wherein the signal is indicative of an adjustment in power magnitude for achieving the power modulation level.

7. The method of claim 3, wherein the power modulation level is selected from a set of pre-defined power modulation levels.

8. The method of claim 3, wherein the power modulation level is >0% and <100% of available power.

9. The method of any preceding claim, wherein the heating device (20) comprises a metallic layer.

10. The method of any preceding claim, wherein the heating device (20) comprises at least two heating zones (44,46,48,50,52,54) to which power is applied independently.

11. The method of any preceding claim, wherein the heating device (20) is for a window (10,106) on the vehicle.

12. A controller (116) for controlling power supplied to a heating device (20) on a vehicle, the controller (116) comprising:
an input (121) for receiving information indicative of altitude of the vehicle and outside air temperature;
a processor (120) for generating a signal at least in part on a basis of the information indicative of the altitude of the vehicle and outside air temperature for controlling power to the heating device (20) in an open loop manner; and
an output (121) for transmitting the signal to a power regulator (118) for causing power to be supplied to the heating device (20) in accordance with the signal,
**characterized in that** adjustments to the heating device (20) are based on an anticipated cruising altitude of the vehicle.

13. A system (104,182) for controlling power supplied to a heating device (20) on a vehicle, the system comprising:
a controller (116) comprising:
an input (121) for receiving information indicative of altitude of the vehicle and outside air temperature a processor (120) for generating a signal at least in part on a basis of the information indicative of altitude of the vehicle and outside air temperature for controlling power to the heating device in an open loop manner; and
an output (121) for transmitting the signal; and
a power regulator (118) for receiving the signal and causing power to be supplied to the heating device (20) in accordance with the signal, **characterized in that** adjustments to the heating device (20) are based on an anticipated cruising altitude of the vehicle.

14. The method as defined in claim 1, wherein the heating device (20) comprises at least two heating zones (44,46,48,50,52,54) to which power can be applied independently, the at least two heating zones being associated with a same window (10,106) of the vehicle.

15. The method as defined in claim 1, comprising receiving information indicative of an air speed associated with the vehicle and generating the signal at least in part on a basis of the information indicative of the air speed.

16. The method as defined in claim 1, wherein the information indicative of the altitude of the vehicle comprises a pressure altitude.

17. The controller (116) as defined in claim 12, wherein the processor (120) is configured to generate the signal for controlling at least two heating zones (44,46,48,50,52,54) associated with a same window (10,106) of the vehicle and to which power can be applied independently.

18. The controller (116) as defined in claim 12, wherein the input (121) is configured to receive information indicative of an air speed associated with the vehicle and the processor (120) is configured to generate the signal at least in part on a basis of the information indicative of the air speed.

19. The controller (116) as defined in claim 12, wherein the information indicative of the altitude of the vehicle comprises a pressure altitude.

20. The system (104,182) as defined in claim 13, wherein the processor (120) is configured to generate the signal for controlling at least two heating zones (44,46,48,50,52,54) associated with a same window (10,106) of the vehicle and to which power can be applied independently.

21. The system (104,182) as defined in claim 13, wherein the input (121) is configured to receive information indicative of an air speed associated with the vehicle and the processor (120) is configured to generate the signal at least in part on a basis of the information indicative of the air speed.

22. The system (104,182) as defined in claim 13, wherein the information indicative of the altitude of the vehicle comprises a pressure altitude.

## Patentansprüche

1. Verfahren zum Steuern der Leistung für eine Heizvorrichtung (20) an einem Fahrzeug, wobei das Verfahren umfasst:
Empfangen von Informationen, die die Höhe des Fahrzeugs und die Außenlufttemperatur angeben, Erzeugen eines Signals zumindest teilweise auf einer Basis der Informationen, die die Höhe des Fahrzeugs und die Außenlufttemperatur angeben, zum Regeln der Leistung für die Heizvorrichtung (20) im offenen Regelkreis; und
Bewirken, dass die Heizvorrichtung (20) gemäß dem Signal mit Leistung versorgt wird, **dadurch gekennzeichnet, dass** Einstellungen an der Heizvorrichtung (20) auf einer erwarteten Reiseflughöhe des Fahrzeugs basieren.

2. Verfahren nach Anspruch 1, wobei das Signal eine Art und Weise zum Modulieren der Leistung für die Heizvorrichtung (20) angibt.

3. Verfahren nach Anspruch 2, wobei das Signal einen Leistungsmodulationspegel zum Modulieren der der Heizvorrichtung (20) zugeführten Leistung angibt.

4. Verfahren nach Anspruch 3, wobei der Leistungsmodulationspegel aus einem Satz von Leistungsmodulationspegeln ausgewählt ist.

5. Verfahren nach Anspruch 3, wobei das Signal ein Leistungstastverhältnis zum Erreichen des Leistungsmodulationspegels angibt.

6. Verfahren nach Anspruch 3, wobei das Signal eine Leistungsgrößeneinstellung zum Erreichen des Leistungsmodulationspegels angibt.

7. Verfahren nach Anspruch 3, wobei der Leistungsmodulationspegel aus einem Satz vordefinierter Leistungsmodulationspegel ausgewählt wird.

8. Verfahren nach Anspruch 3, wobei der Leistungsmodulationspegel > 0% und <100% der verfügbaren Leistung beträgt.

9. Verfahren nach einem der vorhergehenden Ansprüche, wobei die Heizvorrichtung (20) eine Metallschicht umfasst.

10. Verfahren nach einem der vorhergehenden Ansprüche, wobei die Heizvorrichtung (20) mindestens zwei Heizzonen (44, 46, 48, 50, 52, 54) umfasst, an die Leistung unabhängig gegeben wird.

11. Verfahren nach einem der vorhergehenden Ansprüche, wobei die Heizvorrichtung (20) für ein Fenster (10, 106) am Fahrzeug vorgesehen ist.

12. Steuerung (116) zum Steuern der Leistung, die einer Heizvorrichtung (20) an einem Fahrzeug zugeführt wird, wobei die Steuerung (116) umfasst:
einen Eingang (121) zum Empfangen von Informationen, die die Höhe des Fahrzeugs und die Außenlufttemperatur angeben;
einen Prozessor (120) zum Erzeugen eines Signals zumindest teilweise auf einer Basis der Informationen, die die Höhe des Fahrzeugs und die Außenlufttemperatur angeben, zum Regeln der Leistung für die Heizvorrichtung (20) im offenen Regelkreis; und
einen Ausgang (121) zum Senden des Signals an einen Leistungsregler (118), um zu bewirken, dass die Heizvorrichtung (20) gemäß dem Signal mit Leistung versorgt wird, **dadurch gekennzeichnet, dass** Einstellungen an der Heizvorrichtung (20) auf einer erwarteten Reiseflughöhe des Fahrzeugs basieren.

13. System (104, 182) zum Steuern der Leistung, die einer Heizvorrichtung (20) an einem Fahrzeug zugeführt wird, wobei das System umfasst:
eine Steuerung (116), die umfasst:
einen Eingang (121) zum Empfangen von Informationen, die die Höhe des Fahrzeugs und die Außenlufttemperatur angeben,
einen Prozessor (120) zum Erzeugen eines Signals zumindest teilweise auf einer Basis der Informationen, die die Höhe des Fahrzeugs und die Außenlufttemperatur angeben, zum Regeln der Leistung für die Heizvorrichtung im offenen Regelkreis; und
einen Ausgang (121) zum Senden des Signals; und
einen Leistungsregler (118) zum Empfangen des Signals und Bewirken, dass die Heizvorrichtung (20) gemäß dem Signal mit Leistung versorgt wird, **dadurch gekennzeichnet, dass** Einstellungen an der Heizvorrichtung (20) auf einer erwarteten Reiseflughöhe des Fahrzeugs basieren.

14. Verfahren nach Anspruch 1, wobei die Heizvorrichtung (20) mindestens zwei Heizzonen (44, 46, 48, 50, 52, 54) umfasst, an die Leistung unabhängig abgegeben werden kann, wobei die mindestens zwei Heizzonen einem gleichen Fenster (10, 106) des Fahrzeugs zugeordnet sind.

15. Verfahren nach Anspruch 1, umfassend das Empfangen von Informationen, die eine dem Fahrzeug zugeordnete Luftgeschwindigkeit angeben, und das Erzeugen des Signals zumindest teilweise auf einer Basis der Informationen, die die Luftgeschwindigkeit angeben.

16. Verfahren nach Anspruch 1, wobei die Informationen, die die Höhe des Fahrzeugs angeben, eine Druckhöhe umfassen.

17. Steuerung (116) nach Anspruch 12, wobei der Prozessor (120) konfiguriert ist, um das Signal zum Steuern von mindestens zwei Heizzonen (44, 46, 48, 50, 52, 54) zu erzeugen, die einem gleichen Fenster (10, 106) des Fahrzeugs zugeordnet sind und an die die Leistung unabhängig gegeben werden kann.

18. Steuerung (116) nach Anspruch 12, wobei der Eingang (121) konfiguriert ist, um Informationen zu empfangen, die eine dem Fahrzeug zugeordnete Luftgeschwindigkeit angeben, und der Prozessor (120) konfiguriert ist, um das Signal zumindest teilweise auf einer Basis der Informationen zu erzeugen, die die Luftgeschwindigkeit angeben.

19. Steuerung (116) nach Anspruch 12, wobei die Informationen, die die Höhe des Fahrzeugs angeben, eine Druckhöhe umfassen.

20. System (104, 182) nach Anspruch 13, wobei der Prozessor (120) konfiguriert ist, um das Signal zum Steuern von mindestens zwei Heizzonen (44, 46, 48, 50, 52, 54) zu erzeugen, die einem gleichen Fenster (10, 106) des Fahrzeugs zugeordnet sind und an die die Leistung unabhängig gegeben werden kann.

21. System (104, 182) nach Anspruch 13, wobei der Eingang (121) konfiguriert ist, um Informationen zu empfangen, die eine dem Fahrzeug zugeordnete Luftgeschwindigkeit angeben, und der Prozessor (120) konfiguriert ist, um das Signal zumindest teilweise auf einer Basis der Informationen zu erzeugen, die die Luftgeschwindigkeit angeben.

22. System (104, 182) nach Anspruch 13, wobei die Informationen, die die Höhe des Fahrzeugs angeben, eine Druckhöhe umfassen.

## Revendications

1. Procédé pour commander la puissance d'un dispositif de chauffage (20) sur un véhicule, le procédé comprenant :
la réception d'informations indicatives de l'altitude du véhicule et de la température de l'air extérieur générant un signal au moins en partie sur la base des informations indicatives de l'altitude du véhicule et de la température de l'air extérieur pour commander la puissance du dispositif de chauffage (20) d'une manière en boucle ouverte ; et
l'entraînement de la délivrance de puissance au dispositif de chauffage (20) conformément au signal, **caractérisé en ce que** les réglages du dispositif de chauffage (20) sont basés sur une altitude de croisière prévue du véhicule.

2. Procédé selon la revendication 1, dans lequel le signal indique une manière de moduler la puissance du dispositif de chauffage (20).

3. Procédé selon la revendication 2, dans lequel le signal indique un niveau de modulation de puissance pour moduler la puissance délivrée au dispositif de chauffage (20).

4. Procédé selon la revendication 3, dans lequel le niveau de modulation de puissance est sélectionné parmi un ensemble de niveaux de modulation de puissance.

5. Procédé selon la revendication 3, dans lequel le signal indique un rapport cyclique de puissance pour atteindre le niveau de modulation de puissance.

6. Procédé selon la revendication 3, dans lequel le signal indique un ajustement de l'amplitude de puissance pour atteindre le niveau de modulation de puissance.

7. Procédé selon la revendication 3, dans lequel le niveau de modulation de puissance est sélectionné parmi un ensemble de niveaux de modulation de puissance prédéfinis.

8. Procédé selon la revendication 3, dans lequel le niveau de modulation de puissance est > 0 % et <100 % de la puissance disponible.

9. Procédé selon l'une quelconque des revendications précédentes, dans lequel le dispositif de chauffage (20) comprend une couche métallique.

10. Procédé selon l'une quelconque des revendications précédentes, dans lequel le dispositif de chauffage (20) comprend au moins deux zones de chauffage (44, 46, 48, 50, 52, 54) auxquelles la puissance est appliquée indépendamment.

11. Procédé selon l'une quelconque des revendications précédentes, dans lequel le dispositif de chauffage (20) est destiné à une fenêtre (10, 106) sur le véhicule.

12. Unité de commande (116) pour commander la puissance délivrée à un dispositif de chauffage (20) sur un véhicule, l'unité de commande (116) comprenant : une entrée (121) pour recevoir des informations indicatives de l'altitude du véhicule et de la température de l'air extérieur ;
un processeur (120) pour générer un signal au moins en partie sur la base des informations indicatives de l'altitude du véhicule et de la température de l'air extérieur pour commander la puissance du dispositif de chauffage (20) de manière en boucle ouverte ; et
une sortie (121) pour transmettre le signal à un régulateur de puissance (118) pour entraîner la délivrance de puissance au dispositif de chauffage (20) conformément au signal, **caractérisé en ce que** les réglages du dispositif de chauffage (20) sont basés sur une altitude de croisière prévue du véhicule.

13. Système (104, 182) pour commander la puissance délivrée à un dispositif de chauffage (20) sur un véhicule, le système comprenant :
une unité de commande (116) comprenant: une entrée (121) pour recevoir des informations indicatives de l'altitude du véhicule et de la température de l'air extérieur, un processeur (120) pour générer un signal au moins en partie sur la base des informations indicatives de l'altitude du véhicule et la température de l'air extérieur pour commander la puissance du dispositif de chauffage de manière en boucle ouverte ; et une sortie (121) pour transmettre le signal ; et un régulateur de puissance (118) pour recevoir le signal et entraîner la délivrance de puissance au dispositif de chauffage (20) conformément au signal, **caractérisé en ce que** les réglages du dispositif de chauffage (20) sont basés sur une altitude de croisière prévue du véhicule.

14. Procédé selon la revendication 1, dans lequel le dispositif de chauffage (20) comprend au moins deux zones de chauffage (44, 46, 48, 50, 52, 54) auxquelles la puissance peut être appliquée indépendamment, les au moins deux zones de chauffage étant associées à une même fenêtre (10, 106) du véhicule.

15. Procédé selon la revendication 1, comprenant la réception d'informations indicatives d'une vitesse d'air associée au véhicule et la génération du signal au moins en partie sur la base des informations indicatives de la vitesse d'air.

16. Procédé selon la revendication 1, dans lequel les informations indicatives de l'altitude du véhicule comprennent une altitude pression.

17. Unité de commande (116) selon la revendication 12, dans lequel le processeur (120) est configuré pour générer le signal pour commander au moins deux zones de chauffage (44, 46, 48, 50, 52, 54) associées à une même fenêtre (10, 106) du véhicule et auquel la puissance peut être appliquée indépendamment.

18. Unité de commande (116) selon la revendication 12, dans lequel l'entrée (121) est configurée pour recevoir des informations indicatives d'une vitesse d'air associée au véhicule et le processeur (120) est configuré pour générer le signal au moins en partie sur la base des informations indicatives de la vitesse d'air.

19. Unité de commande (116) selon la revendication 12, dans lequel les informations indicatives de l'altitude du véhicule comprennent une altitude-pression.

20. Système (104, 182) selon la revendication 13, dans lequel le processeur (120) est configuré pour générer le signal pour commander au moins deux zones de chauffage (44, 46, 48, 50, 52, 54) associées à une même fenêtre (10, 106) du véhicule et auquel la puissance peut être appliquée indépendamment.

21. Système (104, 182) selon la revendication 13, dans lequel l'entrée (121) est configurée pour recevoir des informations indicatives d'une vitesse d'air associée au véhicule et le processeur (120) est configuré pour générer le signal au moins en partie sur la base des informations indicatives de la vitesse d'air.

22. Système (104, 182) selon la revendication 13, dans lequel les informations indicatives de l'altitude du véhicule comprennent une altitude-pression.
